# EUROPEAN PATENT APPLICATION

(11) **EP 4 682 404 A1**
(43) Date of publication of application: **21.01.2026**
(21) Application number: 24770896.9
(22) Date of filing: 12.03.2024
(51) Int. Cl.: F16H 55/36, F16C 19/06, F16C 33/76, F16C 33/78, F16J 15/16

(54) **IDLER PULLEY**

(30) Priority: 14.03.2023 JP 2023039660; 28.02.2024 JP 2024028130
(71) Applicant: Mitsuboshi Belting Ltd., Kobe-shi, Hyogo 653-0024 (JP)
(72) Inventor: SHIOI, Yuya, Kobe-shi, Hyogo 653-0024 (JP)
(74) Representative: Hoffmann Eitle
(86) International application number: PCT/JP2024/009621
(87) International publication number: WO 2024/190791

(57) **Abstract**

The present invention relates to an idler pulley comprising: a pulley including an outer cylinder part, a boss part located concentrically inside the outer cylinder part, and a connection part that connects a widthwise center portion of the outer cylinder part and a widthwise center portion of the boss part together; a base serving as a rotation axis of the pulley; a bearing located between the pulley and the base; and a pair of dust covers provided on both side surfaces of the bearing. The dust covers cover the both side surfaces of the bearing, and the outside and widthwise end portions of the boss part. The boss part has a recessed annular groove on an outer peripheral surface.

## Description

### TECHNICAL FIELD

The present invention relates to an idler pulley used for adjusting tension of a belt and a layout of the belt.

### BACKGROUND ART

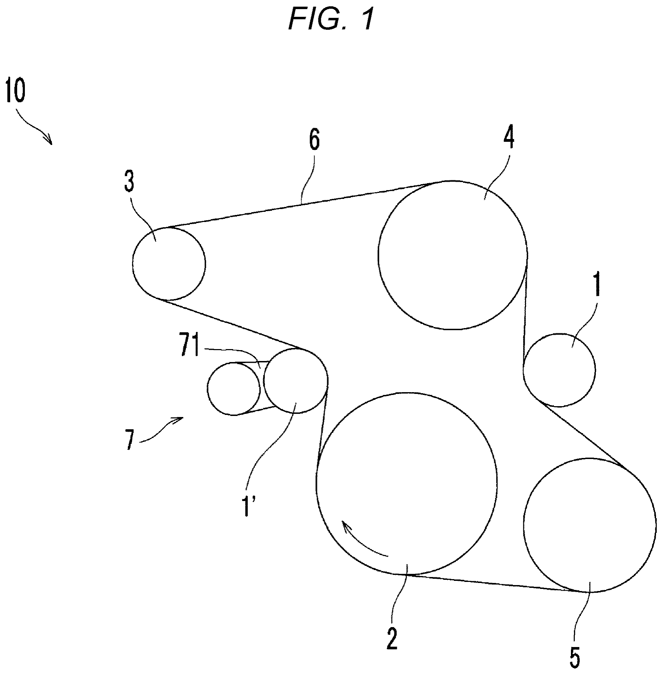

In an accessory drive unit (belt system), accessories such as an alternator, a water pump, and an air conditioner compressor (AC) are driven by power of an automobile engine. For example, as illustrated in FIG. 1, the accessory drive unit (belt system) includes an accessory pulley (alternator pulley or the like) that is connected to a drive shaft (rotating shaft) of an accessory and around which a belt is wound, and an idler pulley that is simply rotatably connected to a base shaft portion (non-rotating shaft body).

The idler pulley includes an idler pulley 1 that is attached independently to an engine block and in contact with the belt to adjust tension of the belt and a layout of the belt, and an idler pulley 1' that is attached to a swinging arm of an automatic tensioner that automatically keeps the tension of the belt at an appropriate level and is pressed against the belt.

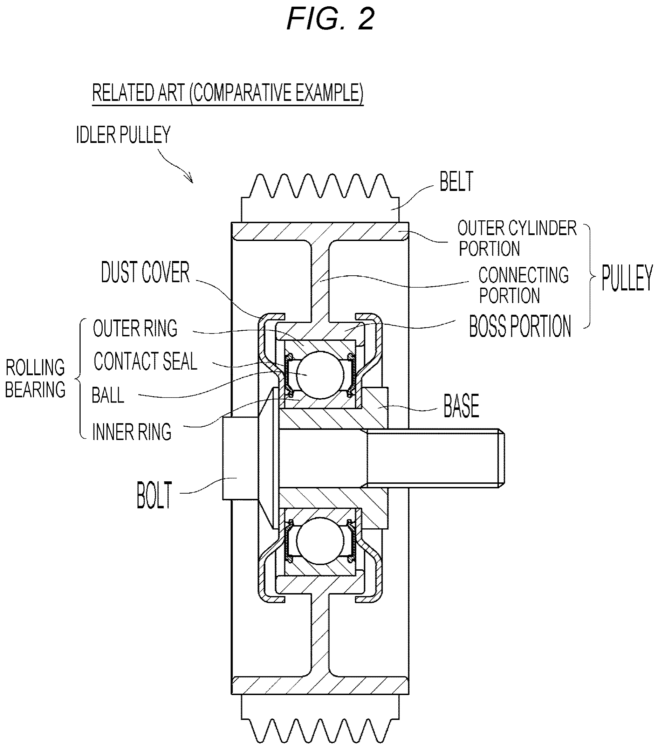

In general, the idler pulley has a structure in which a pulley including an outer cylinder portion (belt guide ring) and a boss portion connected by a connecting portion is rotatably connected to a base (base shaft portion) via a rolling bearing that is in contact with an inner peripheral surface of the boss portion (see FIG. 2).

Such an idler pulley is exposed to an outside when the idler pulley is inserted into the accessory drive unit of the automobile engine. Therefore, foreign matters (water, mud, dust, and the like) such as muddy water flying in from an outside of a rolling bearing can easily get into an inside of the rolling bearing, and entering of such foreign matters can cause a problem in the rolling bearing.

Normally, a seal structure is provided for the rolling bearing of the idler pulley to prevent the foreign matters such as muddy water from entering the inside of the rolling bearing (see FIG. 2). The seal structure includes (A) a seal for the rolling bearing and (B) a cover for the rolling bearing.

### (A) Seal for Rolling Bearing

The rolling bearing provided in the idler pulley of the accessory drive unit is usually a contact-seal type hermetic ball bearing filled with grease. The contact-seal type hermetic ball bearing includes an outer ring, an inner ring disposed on an inner periphery of the outer ring, a plurality of balls rotatably disposed between the inner ring and the outer ring, and an annular contact seal disposed on both sides of the plurality of balls. The contact seal is formed of a rubber-like elastic body and a sheet metal. An outer peripheral edge of the contact seal is fixed to the outer ring, and a lip portion formed on an inner peripheral edge of the contact seal is in elastic contact with a seal surface of the inner ring, whereby the foreign matters from the outside are prevented from entering by a degree of a contact surface pressure.

However, when the contact surface pressure is excessively increased, rotational resistance of the rolling bearing is increased, and thus the contact surface pressure cannot be sufficiently increased. As a result, with the seal structure of the general rolling bearing, it is not possible to completely prevent the foreign matters from entering the rolling bearing.

### (B) Cover (Dust Cover) for Rolling Bearing

In order to prevent the foreign matters such as muddy water, which fly in from the outside, from adhering directly to an area around the rolling bearing and damaging the contact seal for the rolling bearing, a dust cover covering a side surface of the rolling bearing and an outer periphery of an end part of the boss portion is attached to a side edge of the inner ring of the rolling bearing.

However, in recent years, with an increase in vehicle types and areas of use, an a use environment of an automobile has become severe, and even in such a severe environment, it is necessary to prevent the foreign matters such as muddy water from entering the inside of the rolling bearing. Therefore, only the general seal structure described above is insufficient.

In this regard, Patent Literatures 1 to 5 disclose idler pulleys with various improvements to the seal structure (see Table 1).

For example, with respect to the seal for the rolling bearing, each of Patent Literatures 1 and 4 discloses an aspect in which a slinger is provided in addition to a contact seal and a double seal is provided. Further, with respect to the cover for the rolling bearing, Patent Literature 2 discloses an aspect in which water repellent finishing (coating) is applied to an inner peripheral surface of a cover, each of Patent Literatures 3 and 5 discloses an aspect in which a seal is applied to a cover that also covers an outer periphery of an end part of a boss portion, and Patent Literature 4 discloses an aspect in which a cover that covers one entire opening of a pulley is provided.

Patent Literatures 1 to 5 in Table 1 are literatures in Japan.

**Table 1**

| | PTL 1 JP2015-194175A | PTL 2 JP2017-026034A | PTL 3 JP2015-052363A | PTL 4 JP2018-035835A | PTL 5 JPH05-322005 |
|---|---|---|---|---|---|
| (A) Seal for rolling bearing | Double seal (contact seal + slinger) | Only contact seal | Only contact seal | Double seal (contact type elastic seal + slinger) | (Unknown) |
| (B) Cover for rolling bearing | Cover covering up to outer periphery of end part of boss portion | Apply water repellent finishing to inner surface of cover | Cover covering up to outer periphery of end part of boss portion + add seal | Cover covering one entire opening of pulley | Cover covering up to outer periphery of end part of boss portion + add seal |
| (C) Shape of boss portion | Flat shape | Flat shape | Flat shape | Flat shape | Flat shape |

### CITATION LIST

### PATENT LITERATURE

Patent Literature 1: JP2015-194175A
Patent Literature 2: JP2017-026034A
Patent Literature 3: JP2015-052363A
Patent Literature 4: JP2018-035835A
Patent Literature 5: JPH05-322005A

### SUMMARY OF INVENTION

### TECHNICAL PROBLEM

However, in Patent Literatures 1 to 5, new members are added for the seal for the rolling bearing and the cover for the rolling bearing, which increases the number of parts and may be undesirable from the viewpoint of versatility.

That is, since the idler pulley is a pulley structure having a relatively simple structure and is widely used, it is desirable to avoid a special design such as adding a new member and to have versatility (relatively simple structure) (Problem 1).

In the idler pulley, a path through which the foreign matters enter the inside of the rolling bearing is analyzed.

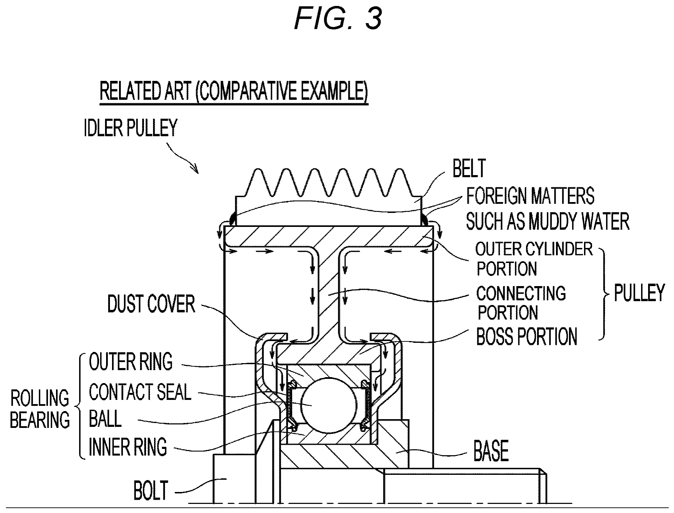

Specifically, when an automobile or the like travels on a wet road surface, muddy water or the like is kicked into an engine room, and the muddy water or the like adheres to the accessory drive unit located on a side surface of the engine block. In particular, when the automobile travels on a flooded road surface, the kicked muddy water can easily reach the accessory drive unit. Further, the kicked muddy water may (a) directly adhere to the pulley (connecting portion or the like) and reach the rolling bearing from the connecting portion of the pulley via the boss portion of the pulley, and (b) adhere to the belt and reach the rolling bearing from the outer cylinder portion (belt guide ring) of the pulley via the connecting portion of the pulley and the boss portion of the pulley (see FIG. 3) (Problem 2).

In the case of (b), it is considered that the muddy water will continue to adhere to the pulley along the belt for a while even when the automobile is stopped due to idling stop or the like.

Therefore, from the above viewpoints, an object of the present invention is to provide an idler pulley capable of preventing foreign matters from entering an inside of a bearing in a severe use environment of an automobile with a relatively simple structure.

### SOLUTION TO PROBLEM

The present invention relates to an idler pulley including:
a pulley including an outer cylinder portion to be in contact with a belt, a boss portion that is concentrically positioned on an inner side of the outer cylinder portion, and a connecting portion that connects a central part in a width direction of the outer cylinder portion and a central part in a width direction of the boss portion;
a base to be a rotating shaft of the pulley;
a bearing positioned between the pulley and the base; and
a pair of dust covers provided on both side surfaces of the bearing, in which
the pair of dust covers cover both the side surfaces of the bearing, an outer side of the boss portion, and an end part in the width direction of the boss portion, and
the boss portion includes a recessed annular groove on an outer peripheral surface of the boss portion.

According to the above configuration, while the automobile or the like is traveling on a wet road surface (particularly, a flooded road surface), even if foreign matters such as muddy water kicked into an engine room adhere to the belt and are transmitted along surfaces of the outer cylinder portion, the connecting portion, and the boss portion of the pulley of the idler pulley, the transmitted foreign matters such as muddy water can be collected in the recessed annular groove formed on the outer peripheral surface of the boss portion and can be transmitted in a circumferential direction along a bottom surface of the annular groove and discharged from below to an outside.

Accordingly, it is possible to prevent the foreign matters such as muddy water from entering an inside of the rolling bearing not only when the foreign matters such as muddy water adhere directly to the pulley (connecting portion or the like), but also when the foreign matters adhere to the pulley along the belt.

Further, in the above configuration, a special design (addition of a new seal structure or the like) that leads to an increase in the number of parts or deterioration in assemblability is not necessary, and versatility (relatively simple structure) can be ensured. That is, with a relatively simple structure, it is possible to prevent the foreign matters such as muddy water from entering the inside of the rolling bearing in a severe use environment of the automobile.

In the idler pulley according to the present invention, the end part in the width direction of the boss portion can be formed outside a bottom surface of the annular groove.

According to the above configuration, when the foreign matters such as muddy water once collected in the annular groove is transmitted in the circumferential direction along the bottom surface of the annular groove and discharged from below to the outside, it is possible to prevent the foreign matters such as muddy water from entering the inside of the bearing directly from the bottom surface of the annular groove by passing between the dust covers and the end part in the width direction of the boss portion.

In the idler pulley according to the present invention, the bearing can be a rolling bearing including
an outer ring,
an inner ring,
a plurality of rolling elements separately held between the outer ring and the inner ring, and
a pair of contact seals supported by one of the outer ring and the inner ring, in elastic contact with the other of the outer ring and the inner ring, and covering openings on both sides of a space between the outer ring and the inner ring.

When the rolling bearing including the contact seals is used as the bearing, if a contact surface pressure of the contact seals on the outer ring or the inner ring is increased in order to prevent the foreign matters such as muddy water from entering between the outer ring and the inner ring, rotational resistance of the rolling bearing may be increased.

In the idler pulley, even when the rolling bearing including the contact seals is used as the bearing, the pair of dust covers and the recessed annular groove provided on the outer peripheral surface of the boss portion are provided. Therefore, it is possible to prevent the foreign matters such as muddy water from entering between the outer ring and the inner ring without increasing the contact surface pressure of the contact seals on the outer ring or the inner ring.

### ADVANTAGEOUS EFFECTS OF INVENTION

It is possible to provide an idler pulley capable of preventing foreign matters from entering an inside of a bearing in a severe use environment of an automobile with a relatively simple structure.

### BRIEF DESCRIPTION OF DRAWINGS

[FIG. 1] FIG. 1 is a view illustrating a layout of an accessory drive unit.
[FIG. 2] FIG. 2 is a longitudinal sectional view of an idler pulley in the related art (Comparative Example).
[FIG. 3] FIG. 3 is a view of an entry path of foreign matters such as muddy water in the idler pulley in the related art (Comparative Example).
[FIG. 4] FIG. 4 is a longitudinal sectional view of an idler pulley according to the present embodiment (Example).
[FIG. 5] FIG. 5 is a view of an entry path of foreign matters such as muddy water in the idler pulley according to the present embodiment (Example).
[FIG. 6] FIG. 6 is a view illustrating an idle durability tester.
[FIG. 7] FIG. 7 is a view illustrating a case in which the idler pulley according to the present embodiment is used in an automatic tensioner.

### DESCRIPTION OF EMBODIMENTS

Next, an embodiment of the present invention will be described. In the present embodiment, an example will be described in which an idler pulley 1 (idler pulley 1') according to the present invention is applied to an accessory drive unit 10 (belt system) that drives accessories such as an alternator, a water pump (WP), and an air conditioner compressor (AC) using power from an automobile engine.

### (Accessory Drive Unit 10)

In the accessory drive unit 10, as shown in FIG. 1, a belt 6 is wound around a crank pulley 2 connected to a drive shaft of engine power, an alternator pulley 3 connected to a rotating shaft of the alternator, a water pump pulley 4 connected to a rotating shaft of a water pump, and an air conditioner compressor pulley 5 connected to a rotating shaft of an air conditioner compressor. Further, the idler pulley 1 is attached to an engine block between the water pump pulley 4 and the air conditioner compressor pulley 5. The idler pulley 1 is in contact with an outer peripheral surface of the belt 6 in order to adjust tension of the belt 6 and a layout of the belt 6. Further, an automatic tensioner 7 is attached to the engine block between the crank pulley 2 and the alternator pulley 3. The automatic tensioner 7 automatically keeps the tension of the belt 6 at an appropriate level. The idler pulley 1' that is in contact with the outer peripheral surface of the belt 6 is attached to a swinging arm 71 of the automatic tensioner 7. In the present embodiment, the idler pulley 1 will be described.

### (Idler Pulley 1)

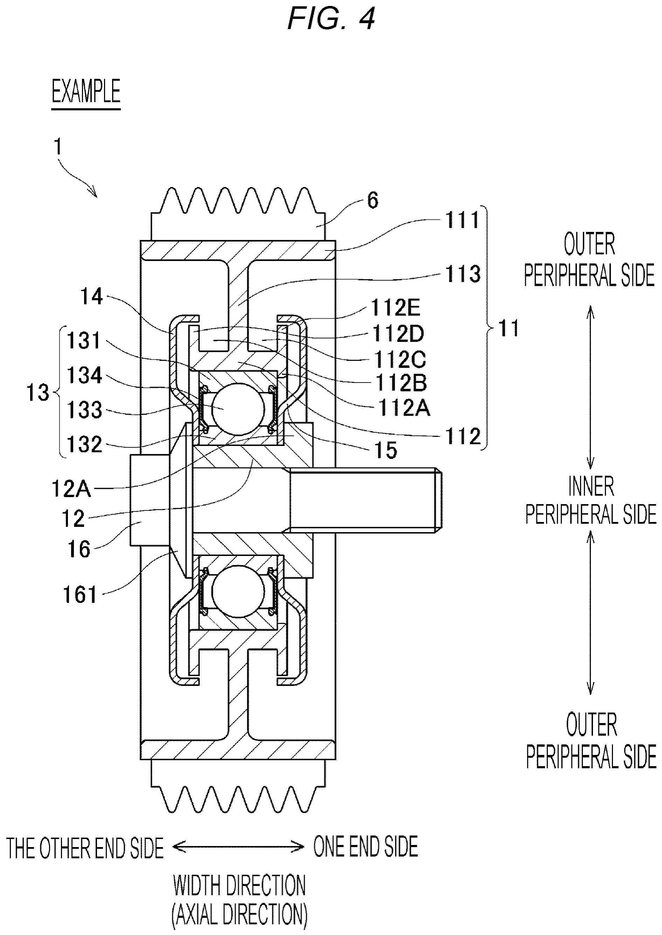

The idler pulley 1 may include, for example, as illustrated in FIG. 4, a pulley 11 that is in contact with the outer peripheral surface of the belt 6, a base 12 to be a rotating shaft of the pulley 11, a rolling bearing 13 press-fitted between the pulley 11 and the base 12, and a pair of annular dust covers 14 and 15 provided on both side surfaces of the rolling bearing 13.

### (Pulley 11)

As illustrated in FIG. 4, the pulley 11 includes an outer cylinder portion 111 to be in contact with the outer peripheral surface of the belt 6, a boss portion 112 that is concentrically positioned inside the outer cylinder portion 111, and a connecting portion 113 that connects a central part in a width direction of the outer cylinder portion 111 and a central part in a width direction of the boss portion 112.

The boss portion 112 includes an annular flange 112A on an inner peripheral surface on one end side in the width direction. Further, recessed annular grooves 112B and 112C are formed on an outer peripheral surface of the boss portion 112 across the connecting portion 113. Specifically, the annular groove 112B is formed by an annular flange 112D (corresponding to an end part on the other end side in the width direction of the boss portion 112) formed on the outer peripheral surface on the other end side in the width direction of the boss portion 112, a side surface on the other end side of the connecting portion 113, and the outer peripheral surface of the boss portion 112. The annular groove 112C is formed by an annular flange 112E (corresponding to an end part on one end side in the width direction of the boss portion 112) formed on the outer peripheral surface on one end side in the width direction of the boss portion 112, a side surface on one end side of the connecting portion 113, and the outer peripheral surface of the boss portion 112.

A depth of each of the annular grooves 112B and 112C (height of each of the flanges 112D and 112E) depends on a groove width (and thus a cross-sectional area of the groove), but is, for example, about 2 mm to 4 mm. If the groove depth is less than 2 mm, the transmitted muddy water may not be completely discharged. On the other hand, if the groove depth exceeds 4 mm, it may not be possible to form the annular grooves 112B and 112C by cutting (grooving).

### (Base 12)

The base 12 has a cylindrical shape and is attached to the engine block (not shown) by a bolt 16. The base 12 includes an annular flange 12A on an outer peripheral surface on one end side in a width direction.

As the base 12, two cylindrical bases each including a flange at one end may be used. In this case, the bases are disposed symmetrically and separately from each other with respect to a center line of the idler pulley in a width direction. In this way, a set of bases including two bases of the same shape and dimension can be used for a plurality of idler pulleys having different widths.

### (Rolling Bearing 13)

The rolling bearing 13 includes an outer ring 131 that abuts against an inner peripheral surface of the boss portion 112, an inner ring 132 that abuts against the outer peripheral surface of the base 12, a plurality of rolling elements 133 that are separately held between a groove that is formed in an inner peripheral surface of the outer ring 131 and has an arc cross section in a width direction and a groove that is formed in an outer peripheral surface of the inner ring 132 and has an arc cross section in the width direction, and a pair of contact seals 134 that cover openings on both sides of a space between the outer ring 131 and the inner ring 132. The rolling bearing 13 is press-fitted between the inner peripheral surface of the boss portion 112 and the outer peripheral surface of the base 12.

Outer peripheral parts of the contact seals 134 are supported by contact seal retaining grooves formed at both end parts of the inner peripheral surface of the outer ring 131. Inner peripheral parts of the contact seals 134 are in elastic contact with abutting surfaces formed at both end parts of the outer peripheral surface of the inner ring 132. The contact seals 134 seal the space between the outer ring 131 and the inner ring 132.

The inner peripheral parts of the contact seals 134 may be supported by contact seal retaining grooves formed at both the end parts of the outer peripheral surface of the inner ring 132. The outer peripheral parts of the contact seals 134 may be in elastic contact with abutting surfaces formed at both the end parts of the inner peripheral surface of the outer ring 131.

### (Dust Covers 14 and 15)

An inner peripheral part of the dust cover 14 is sandwiched between a side surface on the other end side of the inner ring 132 and a flange 161 of the bolt 16. The dust cover 14 has a shape that protrudes toward the other end along a side surface on the other end side of the rolling bearing 13 and a side surface on the other end side of the boss portion 112. An outer peripheral part of the dust cover 14 covers an outer peripheral part of the flange 112D. That is, the dust cover 14 covers the side surface on the other end side of the rolling bearing 13 and the outer peripheral part of the flange 112D provided on an outer side and on the other end side in the width direction of the boss portion 112.

Similarly, an inner peripheral part of the dust cover 15 is sandwiched between a side surface on one end side of the inner ring 132 and the flange 12A of the base 12. The dust cover 15 has a shape that protrudes toward one end along a side surface on one end side of the rolling bearing 13 and a side surface on one end side of the boss portion 112. An outer peripheral part of the dust cover 15 covers an outer peripheral part of the flange 112E. That is, the dust cover 15 covers the side surface on the one end side of the rolling bearing 13 and the outer peripheral part of the flange 112E provided on the outer side and on the one end side in the width direction of the boss portion 112.

The dust covers 14 and 15 are shaped not to cover the annular grooves 112B and 112C in order to discharge foreign matters that have entered the annular grooves 112B and 112C to an outside (so as not to hinder the discharge of the foreign matters).

From the viewpoint of preventing the foreign matters from entering the rolling bearing 13, it is preferable that sizes of gaps between the outer peripheral part of the dust cover 14 and the outer peripheral part of the flange 112D of the boss portion 112 and between the outer peripheral part of the dust cover 15 and the outer peripheral part of the flange 112E be very small. However, taking into consideration rotational resistance of the pulley 11, it is not preferable to respectively bring the dust covers 14 and 15 into contact with the flanges 112D and 112E of the boss portion 112. Therefore, in consideration of a case in which the rolling bearing 13 is used in a single row arrangement (see FIG. 4) and a case in which play occurs in the rolling bearing 13, it is preferable that the gaps have a size (for example, about 0.5 mm) such that the outer peripheral parts of the dust covers 14 and 15 do not respectively come into contact with the outer peripheral parts of the flanges 112D and 112E of the boss portion 112 even if the pulley 11 experiences an angular deflection.

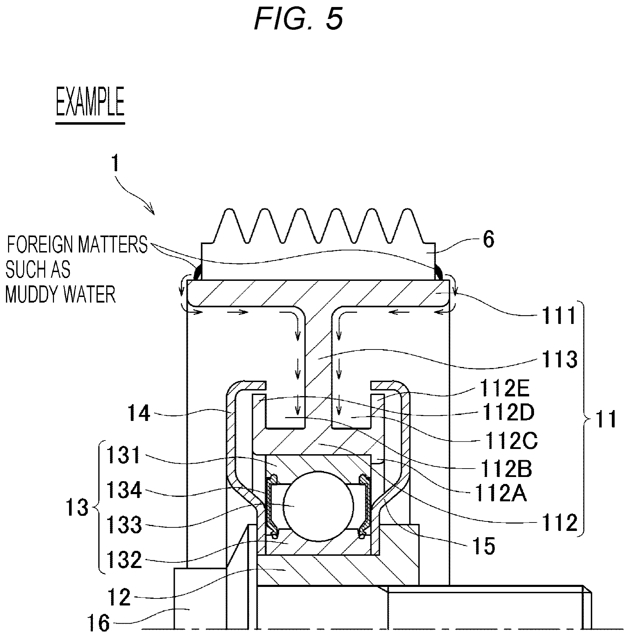

According to the above configuration, while an automobile or the like is traveling on a wet road surface (particularly, a flooded road surface), even if the foreign matters such as muddy water kicked into an engine room adhere to the belt 6 of the accessory drive unit 10 and are transmitted from a side surface and an inner peripheral surface of the outer cylinder portion 111 of the pulley 11 of the idler pulley 1 to the boss portion 112 via a side surface of the connecting portion 113 as illustrated in FIG. 5, the transmitted foreign matters such as muddy water can be collected in the recessed annular grooves 112B and 112C formed on the outer peripheral surface of the boss portion 112, and can be transmitted in a circumferential direction on bottom surfaces (outer peripheral surface of the boss portion 112) of the annular grooves 112B and 112C and discharged from below to the outside.

Accordingly, it is possible to prevent the foreign matters such as muddy water from entering an inside of the rolling bearing 13 not only when the foreign matters such as muddy water adhere directly to the connecting portion 113 or the like of the pulley 11, but also when the foreign matters adhere to the pulley 11 along the belt 6.

Further, in the above configuration, a special design (addition of a new seal structure or the like) that leads to an increase in the number of parts or deterioration in assemblability is not necessary, and versatility (relatively simple structure) can be ensured. That is, with a relatively simple structure, it is possible to prevent the foreign matters such as muddy water from entering the inside of the rolling bearing 13 in a severe use environment of the automobile.

Further, in the above configuration, the outer peripheral parts of the flanges 112D and 112E provided at both the end parts in the width direction of the boss portion 112, which are respectively covered by the outer peripheral parts of the dust covers 14 and 15, are formed on an outer periphery side of the bottom surfaces of the annular grooves 112B and 112C (outer peripheral surface of the boss portion 112).

Accordingly, when the foreign matters such as muddy water collected in the annular grooves 112B and 112C are transmitted in the circumferential direction along the bottom surfaces of the annular grooves 112B and 112C and discharged from below to the outside, it is possible to prevent the foreign matters such as muddy water from entering the inside of the rolling bearing 13 directly from the bottom surfaces of the annular grooves 112B and 112C by passing between the outer peripheral part of the dust cover 14 and the outer peripheral part of the flange 112D and between the outer peripheral part of the dust cover 15 and the outer peripheral part of the flange 112E.

Even if the foreign matters such as muddy water enter the edge of rolling bearing 13 (spaces sandwiched between the rolling bearing 13 and the dust covers 14 and 15) from the gaps between the outer peripheral part of the dust cover 14 and the outer peripheral part of the flange 112D of the boss portion 112 and between the outer peripheral part of the dust cover 15 and the outer peripheral part of the flange 112E, if a seal structure of the rolling bearing 13 is a normally used contact seal 134, the rolling bearing 13 can withstand practical use without requiring a special structure (for example, further addition of a slinger as described in Patent Literatures 1 and 4).

When the rolling bearing 13 including the contact seal 134 is used as the bearing as described above, if a contact surface pressure of the contact seal 134 on the inner ring is increased in order to prevent the foreign matters such as muddy water from entering between the outer ring 131 and the inner ring 132, the rotational resistance of the rolling bearing 13 may be increased.

In the idler pulley 1, even when the rolling bearing 13 including the contact seal 134 is used as the bearing, the pair of dust covers 14 and 15 and the recessed annular grooves 112B and 112C provided on the outer peripheral surface of the boss portion 112 are provided. Therefore, it is possible to prevent the foreign matters such as muddy water from entering between the outer ring 131 and the inner ring 132 without increasing the contact surface pressure of the contact seal 134 on the inner ring 132.

### (Production of Idler Pulley)

The pulley 11 may be formed of a metal or a resin, but the recessed annular grooves 112B and 112C formed in the boss portion 112 of the pulley 11 cause undercut parts (recessed portions that cannot be removed from a die as it is). Therefore, at least the annular grooves 112B and 112C are preferably formed by a cutting method (grooving).

In this case, for example, an entire surface including the annular grooves 112B and 112C may be formed by the cutting after a precursor of the pulley 11 is obtained by preprocessing using a die molding method. Further, when the pulley 11 is formed entirely by the cutting, it is preferable to use, for example, a free-cutting steel material that has excellent cutting workability as a material.

The dust covers 14 and 15 can be generally formed into a predetermined annular shape (ring shape) by press forming using a metal material such as a carbon steel pipe for general structural purposes (for example, STK400 which is a product conforming to JISG3444: 2016).

The base 12 is generally formed into a predetermined shape by a cutting method or the like using a metal material.

In assembling the idler pulley 1, the rolling bearing 13 is press-fitted into the boss portion 112 such that an outer peripheral surface of the rolling bearing 13 (outer peripheral surface of the outer ring 131) is in contact with the inner peripheral surface of the boss portion 112 of the pulley 11, thereby obtaining a pulley and rolling bearing assembly in which the pulley 11 and the rolling bearing 13 are integrated.

Next, the pulley and rolling bearing assembly, together with the pair of dust covers 14 and 15 and the base 12, are attached to a target mounting portion (for example, a base of an engine block) via the bolt 16. In this way, the idler pulley 1 is completed in which the pulley 11 is rotatably connected to the base 12 by the rolling bearing 13.

### (Other Embodiments)

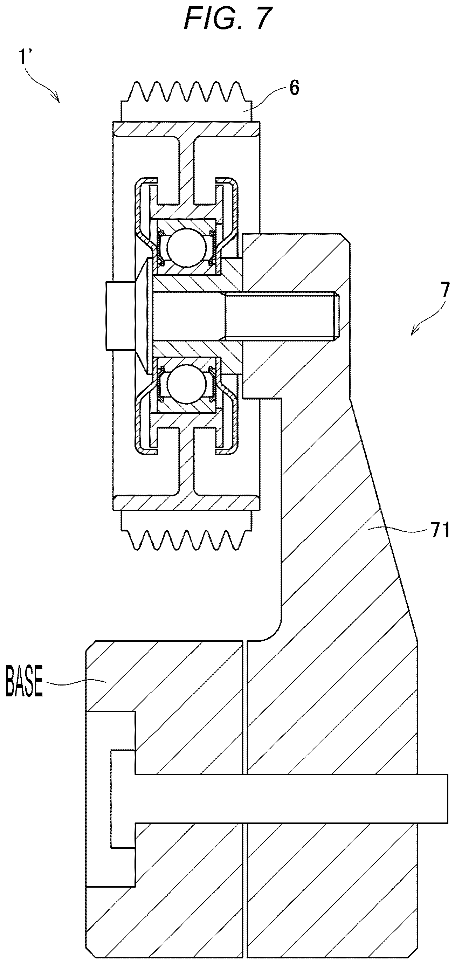

As shown in FIG. 1, the idler pulley having the above-mentioned configuration may be used as the idler pulley 1' of the automatic tensioner 7 that automatically keeps tension of the belt 6 at an appropriate level. Specifically, as shown in FIG. 7, the idler pulley 1' may be used by being attached to the swinging arm 71 that is biased to rotate in a predetermined direction on a base (see also the idler pulley 1' in FIG. 1).

### EXAMPLES

In the idler pulley according to the present invention, it is necessary to prevent the foreign matters such as muddy water from entering the bearing in a severe use environment of an automobile with a relatively simple structure.

Therefore, in the present example, each of idler pulleys (hereinafter, test pieces) according to Example and Comparative Example was produced, and a disassembly test and a muddy water dropping test were performed to perform comparative verification.

The present invention will be described in more detail below based on Examples, but the present invention is not limited to these Examples.

### [Use Material]

Pulley: free-cutting steel material (SUM22) (product conforming to JISG4804:2008)
Rolling bearing: NSK6203 (seal: contact seal) (commercially available product) manufactured by NSK Ltd.
The slinger (sheet metal having an L-shaped cross section) described in each of Patent Literatures 1 and 4 was not added to the seal structure.
Dust cover: carbon steel pipe for general structural purposes (STK400) (product conforming to JISG3444:2016)
Base: free-cutting steel material (SUM22) (product conforming to JISG4804:2008)

### [Production of Idler Pulley]

The pulley and the base were produced by cutting using the above used material.

The dust cover was produced by press forming using the above used material.

The assembly of the idler pulley was performed according to the method described in the above embodiment, and the produced idler pulley was attached via a bolt to a predetermined position of an idle durability tester to be described later.

### (Exterior Dimension and Shape of Produced Idler Pulley (Test Piece))

The idler pulley in Example is shown in FIG. 4, and the idler pulley in Comparative Example is shown in FIG. 2. The only difference in the structure of each part between the test pieces was the presence or absence of an annular groove in the boss portion, and there were no other differences.
Dimension: outer diameter 80 mm, width 30 mm
Outer peripheral surface of boss portion:
   In Example, recessed annular grooves were formed (uniformly on the circumference, depth 4 mm × width 4.5 mm, the number of grooves: 2, total cross-sectional area of grooves: 36 mm²).

In Comparative Example, the outer peripheral surface was formed in a flat shape (there was no recessed annular groove).
Outer diameter of dust cover: 57 mm in Example and 49 mm in Comparative Example
Size of gap between outer peripheral part of dust cover and outer peripheral part of flange of boss portion (outer periphery of end part of boss portion): 0.5 mm in both Example and Comparative Example

### [Evaluation of Idler Pulley: Items, Method, and Criterion]

In order to determine whether an idler pulley capable of solving the problems of the present application was obtained for each test piece (Example and Comparative Example), versatility (whether the structure was simple) and durability (whether the foreign matters such as muddy water enter the inside of the rolling bearing) were verified.

### [Disassembly Test]

### (Test Method)

In order to determine the versatility (whether the structure was simple), the idler pulley (test piece) was disassembled and the structure (seal structure and the like) of each part was checked.

### (Determination Criterion)

In a case in which a special design (addition of a new seal structure or the like) that led to an increase in the number of parts or deterioration in assemblability was not applied in addition to a general seal structure (a rolling bearing including a contact seal and a dust cover that covered from a side surface of the rolling bearing to an outer periphery of an end part of a boss portion), it was evaluated that versatility (relatively simple structure) of the idler pulley can be ensured, and it was determined as "a".

In a case in which the special design was applied in addition to the general seal structure, it was evaluated that the versatility (relatively simple structure) of the idler pulley cannot be ensured, and it was determined as "b".

From the viewpoint of suitability (versatility of the idler pulley) for actual use in this application, the idler pulley determined as "a" was determined as an acceptable-level idler pulley.

### [Muddy Water Dropping Test]

### (Test Method)

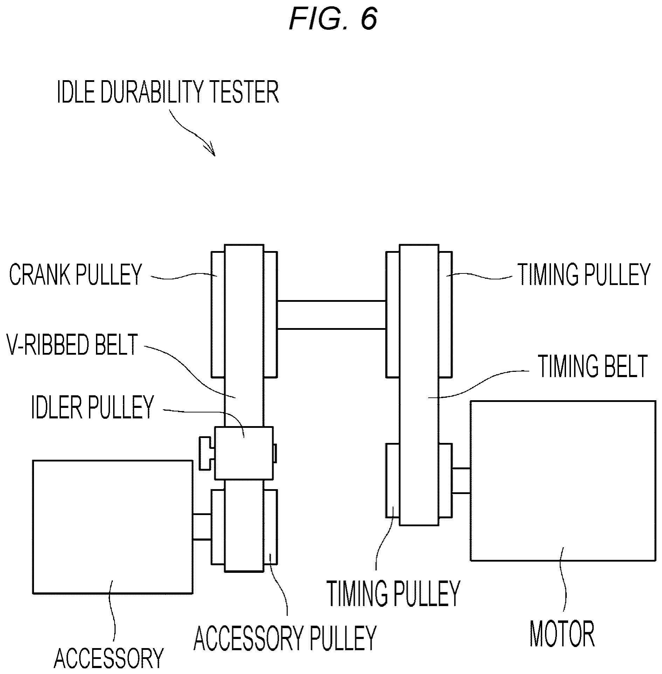

The idle durability tester shown in FIG. 6 was used.

The idle durability tester had a configuration in which a V-ribbed belt was stretched over the same pulley layout as the accessory drive unit shown in FIG. 1, and a timing belt was stretched over a timing pulley fixed coaxially with a crank pulley and a timing pulley connected to a rotating shaft of a motor.

An idler pulley (test piece) was disposed between a crank pulley and an accessory pulley (alternator pulley) in such a manner that an outer peripheral surface of the pulley (outer cylinder portion) was in contact with a back surface of the V-ribbed belt.

A muddy water dropping device (not shown) was disposed above the idler pulley (test piece). The muddy water dropping device dropped muddy water onto the back surface of the V-ribbed belt stretched over the idler pulley. A composition of the used muddy water was 70% by weight of tap water and 30% by weight of eight kinds of test powders defined in JIS-Z8901:2006 (Kanto loam).

In a muddy water dropping test, the idle durability tester was operated under the following conditions, simulating a travel situation in which an actual vehicle repeatedly travels slowly (idling state) and stops (idling stop state).
Rotational speed of crank pulley: 500 rpm to 800 rpm
Rotational speed of idler pulley (test piece): 3000 rpm
Surface temperature of idler pulley (test piece): 40°C to 50°C

While the idle durability tester was operated under the above conditions, the muddy water was dropped by the muddy water dropping device for 400 cycles, with one cycle lasting a total of 70.5 minutes as shown in Table 2. The muddy water that had adhered to the belt was scattered as the V-ribbed belt moved or adhered to an entire surface of the idler pulley along the V-ribbed belt. Furthermore, the muddy water continued to adhere to the idler pulley along the V-ribbed belt for a while even after the operation was stopped and no more muddy water was dropping.

**Table 2**

| Operation and stop | Time (min) | Dropping of muddy water |
|---|---|---|
| Operation | 45 | No |
| Operation | 0.5 | 500 cc/min |
| Stop | 25 | No |

### (Determination Criterion)

After the muddy water dropping test was completed, whether the muddy water entered the inside of the rolling bearing was checked.

Whether the muddy water had entered the inside of the rolling bearing was determined by removing a seal member of the rolling bearing and visually inspecting turbidity of an inside grease.

When there was no sign of muddy water entering the inside of the rolling bearing (no turbid grease), it was evaluated that the durability of the idler pulley (rolling bearing) was ensured, and it was determined as "a".

When there was a sign of muddy water entering the inside of the rolling bearing (the grease was turbid), it was evaluated that the durability of the idler pulley (rolling bearing) cannot be ensured, and it was determined as "b".

From the viewpoint of suitability (durability of the idler pulley (rolling bearing)) for actual use in this application, the idler pulley determined as "a" was determined as an acceptable-level idler pulley.

### (Comprehensive Determination)

Criteria of comprehensive determination (ranking) as the idler pulley that can solve the present problems were as follows, based on the results of the determination in the above two test items (versatility and durability).

Rank A: The case where all of the above test items were determined as "a" was judged that there was no problem in practical use, and was rated as the best rank.

Rank B: The case where even one of the above test items was determined as "b" was judged to be insufficient as a solution to the present problems and was rated as the fail rank.

### (Verification Result and Consideration)

Verification results are shown in Table 3.

**Table 3**

| | | Example | Comparative Example |
|---|---|---|---|
| | | 1 | 1 |
| Structure | (A) Seal for rolling bearing | Contact seal | Contact seal |
| | (B) Cover (dust cover) for rolling bearing | Cover covering up to outer periphery of end part of boss portion | Cover covering up to outer periphery of end part of boss portion |
| | (C) Shape (outer peripheral surface) of boss portion | Form recessed annular groove | Flat shape |
| Versatility (disassembly test) | Whether parts increase | No | No |
| | Whether assemblability deteriorates | No | No |
| | Determination | a | a |
| Durability (muddy water dropping test) | Muddy water enters inside of bearing | There is no sign | There is sign |
| | Determination | a | b |
| Comprehensive determination (rank) | | A | B |

### (Example and Comparative Example)

In the idler pulleys in which the seal (contact seal) of the rolling bearing and the cover (dust cover covering up to the outer periphery of the end part of the boss portion) of the rolling bearing were the same, shapes of the boss portions were changed and compared with each other.

In the case in which the recessed annular grooves were formed on the outer peripheral surface of the boss portion (Example), the addition of the recessed annular grooves was not recognized as the special design (such as addition of a new seal structure) that led to the increase in the number of parts or the deterioration in assemblability, the versatility was determined as "a", there was no sign of muddy water entering the inside of the rolling bearing, and the durability was also was determined as "a", resulting in a comprehensive evaluation of Rank A.

In the case in which the outer peripheral surface of the boss portion was flat and the recessed annular groove was not formed (Comparative Example), although the versatility was determined as "a", there was a sign of muddy water entering the inside of the rolling bearing, and the durability was determined as "b", resulting in a comprehensive evaluation of Rank B.

### (Obtained Effects)

From Table 3, it can be seen that the idler pulley in Example addresses the above Problems 1 and 2, and by forming the recessed annular grooves on the outer peripheral surface of the boss portion, it is possible to easily prevent the foreign matters from entering the inside of the rolling bearing in the severe use environment of the automobile with a relatively simple structure.

Although the present invention has been described in detail with reference to specific embodiments, it is apparent to those skilled in the art that various changes and modifications can be made without departing from the spirit and scope of the present invention. The present application is based on Japanese Patent Application (Japanese Patent Application No. 2023-039660) filed on March 14, 2023 and Japanese Patent Application (Japanese Patent Application No. 2024-28130) filed on February 28, 2024, and the contents thereof are incorporated herein by reference.

### REFERENCE SIGNS LIST

1 idler pulley
6 belt
10 accessory drive unit
11 pulley
111 outer cylinder portion
112 boss portion
112A flange
112B and 112C annular groove
112D and 112E flange
113 connecting portion
12 base
13 rolling bearing
14 and 15 dust cover

## Claims

1. An idler pulley comprising:
a pulley comprising an outer cylinder portion to be in contact with a belt, a boss portion that is concentrically positioned on an inner side of the outer cylinder portion, and a connecting portion that connects a central part in a width direction of the outer cylinder portion and a central part in a width direction of the boss portion;
a base to be a rotating shaft of the pulley;
a bearing positioned between the pulley and the base; and
a pair of dust covers provided on both side surfaces of the bearing, wherein
the pair of dust covers cover both the side surfaces of the bearing, an outer side of the boss portion, and an end part in the width direction of the boss portion, and
the boss portion comprises a recessed annular groove on an outer peripheral surface of the boss portion.

2. The idler pulley according to claim 1, wherein the end part in the width direction of the boss portion is formed outside a bottom surface of the annular groove.

3. The idler pulley according to claim 1 or 2, wherein the bearing is a rolling bearing comprising:
an outer ring,
an inner ring,
a plurality of rolling elements separately held between the outer ring and the inner ring, and
a pair of contact seals supported by one of the outer ring and the inner ring, in elastic contact with the other of the outer ring and the inner ring, and covering openings on both sides of a space between the outer ring and the inner ring.
